# EUROPEAN PATENT SPECIFICATION

(11) **EP 1 167 115 B1**
(45) Date of publication and mention of the grant of the patent: **07.09.2005**
(21) Application number: 01500127.4
(22) Date of filing: 21.05.2001
(51) Int. Cl.: B60N 2/28

(54) **Child seat**
Kindersitz
Siège pour enfant

(30) Priority: 27.06.2000 ES 200001715 U
(43) Date of publication of application: 02.01.2002
(73) Proprietor: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(56) References cited:
- EP-A- 0 705 728
- EP-A- 1 006 017
- DE-A- 4 329 755
- DE-A- 19 805 331
- DE-U- 8 534 265
- DE-U- 29 721 468
- FR-A- 2 730 460

## Description

This invention relates to a child seat, which includes a central piece of the backrest that can be moved vertically, so that the seat can be used over more time.

Known in the present art are child seats used habitually for taking children from one place to another on short journeys. These seats are also suitable when the child must remain for a certain time in one place, as for example when travelling in a car.

Moreover, these currently known seats which are used in automobiles are specially designed for use by children whose weight lies within a specific range, which means that the seat must be replaced when the child exceeds a certain weight. Such seats must undergo various checks for official approval thereof, thereby ensuring that they comply with regulation safety requirements. More specifically, child seats for automobiles are divided into four groups:
- Group 0: Permits use thereof by a child weighing up to 10 kg (up to the age of 9 months approximately);
- Group 0+: Permits use thereof by a child weighing up to 13 kg (up to the age of 18 months approximately);
- Group 1: Permits use thereof by a child weighing between 9 and 18 kg (between the ages of 9 months and 4 years approximately); and
- Group 2-3: Permits use thereof by a child weighing between 15 and 36 kg (between the ages of 3 and 12 years approximately).

As these figures show, for reasons of safety and comfort these seats can be used for a relatively short period of time.

EP-A-1 006 017, which is regarded as the closest prior art, discloses a child safety seat comprising a back portion and a seat portion. The back portion comprises an upper back support which is movable relative to the back portion and the angle between the upper back support and the seat portion decreases as the upper back support moves towards the seat portion.

DE-U-85 34 265 and DE-A-43 29 755 disclose a child seat which comprise a backrest and a seat portion. The backrest is divided in two pieces, which are movable vertically.

The child seat of the invention resolves the aforesaid drawbacks, while providing other advantages which will be described below.

The child seat of the present invention comprises the features according to claim 1.

Thanks to this feature it is possible to use the child seat of this invention over more time, because as the child grows the central movable part of the backrest can be raised. Thus, as the central part is moved upwards, the child seat of this invention complies with safety standards for a longer time, while at the same time the child feels comfortable in the seat.

The side pieces can thus be removed for reasons of comfort.

Preferably, said detachably fixed side pieces extend laterally approximately from the middle section of the central part down to its lower section.

For a better understanding of all that has been set out in this specification some drawings are attached which, solely by way of example, show a practical case of embodiment of the child seat of the present invention.

In said drawings,
Figure 1 is a front elevation view of the child seat of the invention, with the movable central piece of the backrest in its upper position;
Figure 2 is a front elevation view of the child seat of the invention, with the movable central piece of the backrest in its lower position;
Figure 3 is a front elevation view of the child seat of the invention, with the side pieces removed;
Figure 4 is a rear elevation view of the backrest of the child seat of the invention;
Figure 5 is a perspective view of a detail of Figure 4, showing one of the operating knobs; and
Figure 6 is a perspective view of a detail of Figure 4, showing the gear wheel engaged in the rack of the central piece of the backrest.

As can be seen in the figures, the child seat is made up of a cushioned seat 1 and backrest 2. According to the invention, the backrest includes a central piece 3 that can move vertically.

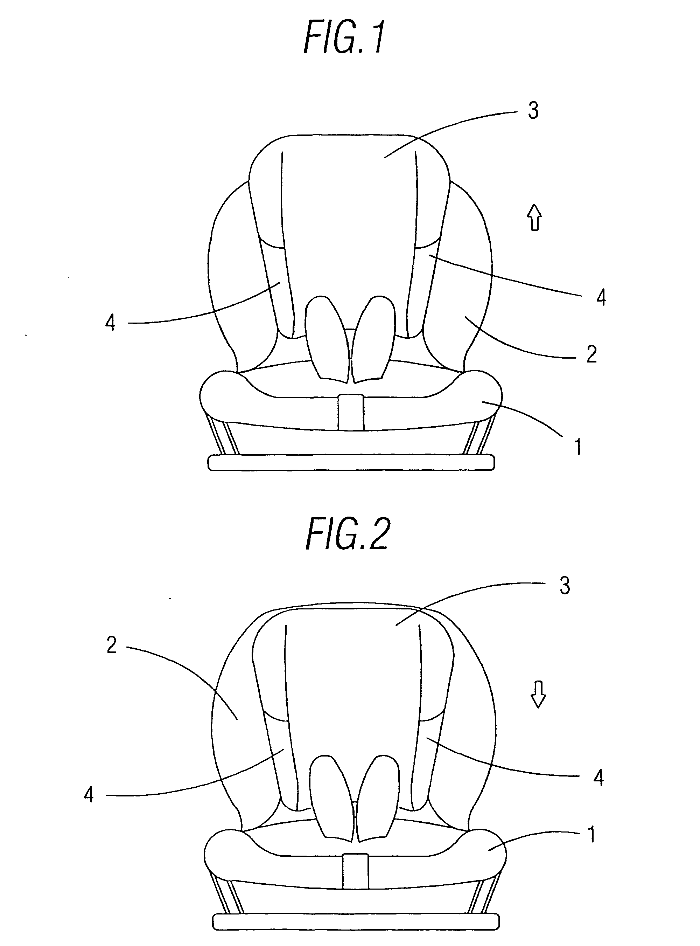

The two extreme positions of this central piece 3 are shown in Figures 1 and 2. As these figures show, in its raised position (Figure 1) the upper part of the central piece 3 projects from the backrest 2, while in its lower position (Figure 2) the upper part of the central piece 3 does not project from the backrest 2 but is substantially aligned with it.

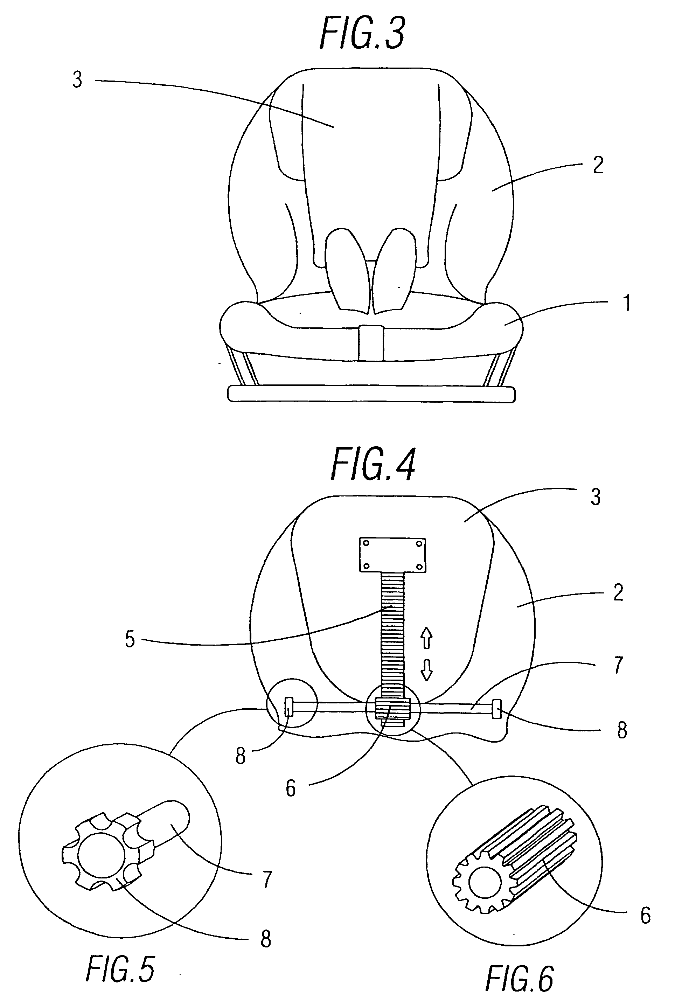

The central piece 3 includes some side pieces 4 which extend from its central part down to its lower part. These side pieces 4 are detachably fixed onto the central piece 3, in such a way that whenever so wished said side pieces can be removed (Figure 3).

It should be stated that said side pieces 4 are fixed onto the central piece 3 in any suitable way, and can be fitted and removed at will.

For carrying out the vertical movement of the central piece 3, that piece includes a rack 5 on its rear part. With this rack 5 there engages a gear wheel 6 (Figure 6) attached to a fixed bar 7, which bar can rotate about its axis.

In order to rotate the bar 7 about its axis, the bar includes at each of its ends an operating knob 8. Thus, manual turning of one of these knobs 8 will lead to rotation of the gear wheel 6 in one or another direction. This rotation will in turn cause the central piece 3 to rise and descend with respect to the backrest 2, depending on whether the knob 8 is turned in one or the other direction.

The user can thus easily place the central piece 3 at the right position to ensure the safety and comfort of the child.

## Claims

1. Child seat including a seat (1) and a backrest (2), including in turn a central piece (3) which can move vertically with respect to the rest of the backrest (2), **characterised in that** said central backrest piece (3) includes at its rear part a rack (5) to which is coupled a gear wheel (6), with said gear wheel (6) being attached to a fixed bar (7) which rotates about its longitudinal axis, and the bar (7) having an operating knob (8) at each of its ends so that turning the knobs (8) causes the gear wheel (6) to rotate and the central piece (3) to rise vertically with respect to the rest of the backrest (2), whereby said central piece (3) includes a pair of side pieces (4) detachably fixed on said central piece (3).

2. Child seat as claimed in Claim 1, **characterised in that** said detachably fixed side pieces (4) extend laterally approximately from the middle section of the central part (3) to its lower section.

## Patentansprüche

1. Kindersitz mit einem Sitz (1) und einer Rückenlehne (2), die ihrerseits ein mittiges Teil (3) aufweist, das verzikal bezüglich des Restes der Rückenlehne (2) bewegbar ist, **dadurch gekennzeichnet, dass** das mittige Rücklehnenteil (3) an seinem hinteren Abschnitt eine Zahnschiene (5) aufweist, mit der ein Zahnrad (6) gekoppelt ist, wobei das Zahnrad (6) an einer festen Stange (7) angebracht ist, die um ihre Längsachse dreht, und wobei die Stange (7) einen Betätigungsknopf (8) an jeder ihrer Enden derart aufweist, dass ein Drehen der Knöpfe (8) das Drehen des Zahnrades (6) und das vertikale Ansteigen des mittleren Teils (3) bezüglich des Restes der Rückenlehne (2) verursacht, wobei das mittige Teil (3) ein Paar Seitenteile (4) aufweist, die lösbar an dem mittigen Teil (3) befestigt sind.

2. Kindersitz nach Anspruch 1, **dadurch gekennzeichnet, dass** die demontierbar befestigten Seitenteile (4) sich seitlich etwa von dem mittleren Abschnitt des mittigen Teils (3) zu seinem unteren Abschnitt erstrecken.

## Revendications

1. Siège pour enfant comprenant une assise (1) et un dossier (2), comportant une pièce centrale (3) qui peut se déplacer verticalement par rapport au reste du dossier (2), **caractérisé en ce que** ladite pièce centrale de dossier (3) comporte au niveau de sa partie arrière une crémaillère (5) à laquelle est couplé un pignon (6), ledit pignon (6) étant fixé à une barre fixe (7) rotative autour de son axe longitudinal, et la barre (7) possédant un bouton de manoeuvre (8) à chacune de ses extrémités, de telle sorte que l'actionnement en pivotement des boutons (8) entraîne la rotation du pignon (6) et le déplacement vertical vers le haut de la pièce centrale (3) par rapport au reste du dossier (2), ladite pièce centrale (3) comportant une paire de pièces latérales (4) fixées de façon détachable sur ladite pièce centrale (3).

2. Siège pour enfant selon la revendication 1, **caractérisé en ce que** lesdites pièces latérales (4) fixées de façon détachable s'étendent latéralement approximativement depuis la section médiane de la partie centrale (3) jusqu'à sa section inférieure.
